Europäisches Patentamt

European Patent Office

Office européen des brevets

(11) Publication number: **0 481 411 A1**

# EUROPEAN PATENT APPLICATION

(21) Application number: **91117507.3**

(22) Date of filing: **14.10.91**

(51) Int. Cl.5: **B60N 2/46**, B60N 3/02, F16B 5/02

The second priority claimed (23.01.1991)has the number TO91U000016.

(30) Priority: **17.10.90 IT 5331490**
       **23.01.91**

(43) Date of publication of application:
**22.04.92 Bulletin 92/17**

(84) Designated Contracting States:
**DE FR GB**

(71) Applicant: **FOGGINI PROGETTI S.r.l.**
**Via Aosta, 17**
**I-10092 Beinasco Torino(IT)**

(72) Inventor: **Foggini, Paolo**
**Strada Moncalieri 2**
**I-10020 Revigliasco (Prov. of Torino)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Armrest for motor vehicles.

(57) The armrest comprises a body, a handle, coupling supports and ridges which are monolithic and have a substantially constant thickness. At the end of the handle (11) there is a coupling device which comprises a first radially expandable bush (26) which receives, fitted on its outside, a cylindrical eyelet (12) of the handle and contains a second bush (28). The second bush (28) is made of elastomeric material, fitted on a threaded stud bolt (27) and accommodated between an axial shoulder of the first bush and a presser disk (29). A nut (30) acts on the presser disk (29). The nut (30) is screwed on the stud bolt, which compresses the second bush, expanding it against the first bush, which in turn expands into forced contact engagement against the eyelet (12).

Fig. 5

The present invention relates to an armrest for motor vehicles, and in particular to an armrest made of polymeric material which can be injection-molded, of the type which comprises a body which is intended to support the elbow and part of the forearm, which extends into a handle which ends with a coupling eyelet, and wherein said body bears one or more supports for the connection of the item to the door of the motor vehicle.

Known armrests of the specified type have rather large dimensions, since they have an overall length comprised between 70 and 80 cm and a maximum width, measured on the coupling body, which is comprised between 7 and 9 cm. They are made of polymeric material and are obtained with injection-molding processes, and due to their dimensions and to the presence of the handle, of ridges and of coupling supports, all of which are non-hollow elements which constitute so-called solids, have a considerable mass and therefore are heavy and expensive on one hand and are difficult to mold, due to the material shrinkages which occur at said solids, on the other hand.

An object of the present invention is to eliminate these disadvantages by significantly lightening the structure of the armrest and by eliminating regions of concentration of material subject to shrinkage phenomena.

Furthermore, known armrests, although they are subjected to considerable loads and stresses, are rigidly associated with the vehicle body by means of stud bolts which are pre-welded or otherwise rigidly associated with the metal plates and on which corresponding bushes, molded monolithically with the armrest, are fitted; the threaded stud bolts are suitable for receiving respective locking nuts which exert force on the armrest body.

This known coupling system has disadvantages when, as in the case of the lightened handle according to the present invention, it is not possible -- also due to styling reasons -- to define surfaces which are large enough to adequately distribute the stress of the locking nut, which therefore, if locked tight, can cause the breakage of the material of the armrest. Said armrests are furthermore usually mounted on the coverings or panels which, being made of soft material, do not ensure their correct support and consequently do not allow the correct tightening of the coupling means.

Another object of the present invention is to provide an armrest with a coupling device which allows to eliminate these disadvantages.

A further object of the present invention is to provide an armrest with a coupling device which can offer a moderately elastic retention in order to reduce the stress discharged onto the coupling pin.

In order to achieve this aim, these objects and others which will become apparent from the following detailed description, the present invention relates to an armrest for motor vehicles, characterized in that it comprises a body, a handle, coupling supports and transverse and longitudinal ridges which are monolithic and have a substantially constant thickness, said body, said handle and said coupling supports being hollow, and in that at the end of the handle there is a coupling device which comprises a first radially expandable bush which receives, fitted on its outside, a cylindrical eyelet of the handle and contains, inside it, a second elastomeric bush which is fitted on a threaded stud bolt and is accommodated between an axial shoulder of the first bush and a presser disk; a nut which is screwed on the stud bolt, acts on the disk and is suitable for compressing the second bush against the first one in order to expand the latter into forced contact engagement against the eyelet of the handle.

Further characteristics and advantages will become apparent from the following detailed description and with reference to the accompanying drawings, given by way of non-limitative example, wherein:

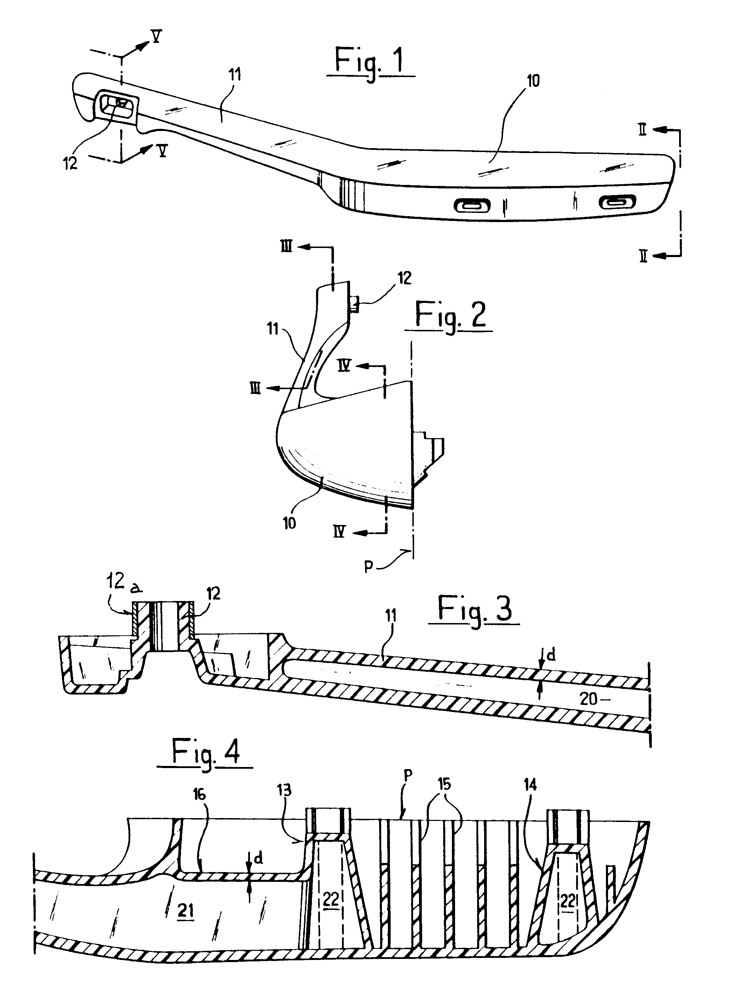

figure 1 is a lateral elevation view of an armrest according to the present invention;
figure 2 is a front view, taken in the direction of the arrows II-II of figure 1;
figure 3 is a partial longitudinal sectional view, taken along the line III-III of figure 2;
figure 4 is a longitudinal sectional view, taken along the line IV-IV of figure 2;
figure 5 is an enlarged-scale sectional view, taken along the line V-V of figure 1;
figure 6 is an exploded perspective view of the device for coupling the end of the handle.

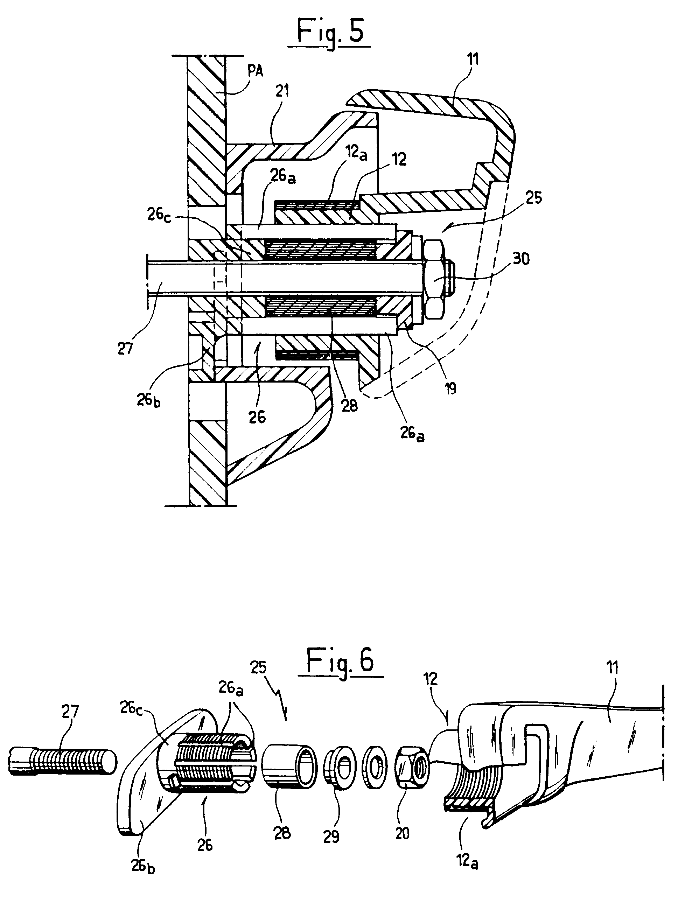

In the drawings, the numeral 10 indicates the body of the armrest, which extends uninterruptedly into a handle 11 which is displaced backward with respect to the coupling plane P of the body 10, so as to delimit a gap for the passage of the hand which is comprised between the handle and the panel PA of the door of the vehicle. The end of the handle bears a coupling eyelet 12 for the passage of a coupling device 25 illustrated in figure 5 and described in detail hereinafter. Preferably, the eyelet 12 is externally embraced by a metallic ring 12a which is suitable for preventing its radial deformation. Coupling supports 13-14 are provided in the body 10 and are crossed by respective slotted holes through which coupling screws, not illustrated, pass with the possibility of being adjusted. The body 10 substantially has the shape of a half-shell, and stiffening ridges 15 are provided between the supports 13-14. A further longitudinal ridge 16 is provided between the support 13 and the handle 11.

As clearly illustrated in the figure, the body 10, the handle 11, the supports 13-14 and the ridges 15-16 are monolithic and have a thickness "d" which is substantially constant, since cavities 20, 21, 22 are provided in replacement of the solids which, with simple injection-molding, would form at the handle 11, at the ridge 16 and at the supports 13-14 respectively. This is achieved by means of a single injection-molding, by virtue of the forced distribution of the material in the plastic state produced by a pressurized fluid, advantageously nitrogen, which is fed simultaneously with the injected material. A fluid distribution nozzle, which is coaxial to the material injection nozzle, introduces said fluid into the mold in a known manner with pressures comprised between 5 and 15 atmospheres.

The reference numeral 25 generally indicates the device for coupling the end of the handle 11 to the door of the motor vehicle, which is provided with a covering panel PA.

According to the present invention, the device 25 comprises a first bush 26 which is made of polymeric material and is provided with diametrical slits 26a which allow its radial expansion.

The bush 26 is provided with a supporting plate 26b and is intended to receive the coupling eyelet 12, which is fitted on its outside. The axial position of the eyelet with respect to the bush can be varied in order to adjust the distance of the end of the handle 11 from the panel PA of the door.

In order to allow the above described adjustment and at the same time the effective axial coupling of the eyelet 12 to the bush 26, the inner surface of the former and the outer surface of the latter are provided with protruding ridges which mutually interpenetrate and are illustrated in figure 6.

The bush 26 is provided with a bottom 26c which is centrally perforated in order to allow the passage of a threaded stud bolt 27 which is pre-welded to, or otherwise rigidly associated with, the metal plate of the door. The bottom 26c defines an axial shoulder in the internal cavity of the bush, against which a second bush 28, made of elastomeric material, abuts; said second bush 28 is fitted on the threaded bolt 27 and is contained in the cavity of the first bush 26. A presser disk 29 closes the cavity of the bush 26 and is pushed against the bush 28 by the action of a nut 30 which is screwed on the threaded bolt 27. The securing of the nut 30 causes the compression of the bush 28, which expands into forced contact engagement against the bolt 27 and against the first bush 26, which in turn, by virtue of the diametrical slits 26a, adheres tightly to the coupling eyelet 12, rigidly associating it with the bolt 27. A joint covering 31, retained by the plate of the bush 26, closes the gap comprised between the end of the handle 11 and the panel PA of the door.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Armrest for motor vehicles, characterized in that it comprises a body (10), a handle (11), coupling supports (13-14), transverse ridges (15) and longitudinal ridges (16) which are monolithic and have a substantially constant thickness, said body, said handle and said coupling supports being hollow, and in that at the end of the handle there is a coupling device (25) which comprises a first radially expandable bush (26) which receives, fitted on its outside, a cylindrical eyelet (12) of the handle and contains, inside it, a second elastomeric bush (28) which is fitted on a threaded stud bolt and is accommodated between an axial shoulder of the first bush and a presser disk (29); a nut (30), which is screwed on the stud bolt (27) and acts on the disk (29), being suitable for compressing the second bush against the first one in order to expand the latter into forced contact engagement against the eyelet of the handle.

2. Armrest according to claim 1, characterized in that the cavities (20-21-22) of the body, of the handle and of the coupling supports are obtained by means of a single molding by virtue of the forced distribution of the polymeric material in the plastic state by means of pressurized fluid.

3. Armrest according to claim 1, characterized in that the outer surface of the first bush (26) of the coupling device (25) is provided with protruding ridges which are suitable for penetrating in corresponding protruding ridges defined on the inner surface of the eyelet (12) of the handle for the axial retention of said eyelet.

4. Armrest according to claims 1 and 3, characterized in that the first bush (26) of the coupling device (25) is provided with diametrical slits (26a) which allow its radial expansion.

5. Armrest according to claim 1, characterized in that said cylindrical eyelet (12) of the handle (11) is provided with an outer jacket (12a) which is suitable for preventing its radial deformation.

6. Armrest according to one or more of claims 1-5, characterized in that it is made of polymeric material.

EP 0 481 411 A1

Fig. 1

Fig. 2

Fig. 3

Fig. 4

5

## Fig. 5

## Fig. 6

**European Patent Office**

**EUROPEAN SEARCH REPORT**

Application Number

**EP 91 11 7507**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-U-8 706 310   (ZIPPERLE)<br>* claims 1,2; figures * *<br>— — — | 1,2,6 | B 60 N 2/46<br>B 60 N 3/02<br>F 16 B 5/02 |
| A | US-A-4 869 543   (GRIMES)<br>* column 2; figures * *<br>— — — | 1,2,6 | |
| A | US-A-2 677 415   (BRINK)<br>* column 1, line 49 - column 4, line 12; figures 1,2 * *<br>— — — | 1,2,6 | |
| A | DE-A-3 203 838   (GEBR. HAPPICH)<br>— — — | | |
| A | GB-A-2 214 594   (DENIS LYN CRUNDALL ALLEN)<br>* the whole document * *<br>— — — | 1 | |
| A | US-A-2 805 597   (O'SHAUGHNESSY)<br>* column 1 - column 3; figures 1-4 * *<br>— — — | 1 | |
| A | FR-A-2 428 540   (FOGGINI)<br>* page 2 - page 3; figures * *<br>— — — | 1,6 | |
| A | US-A-2 348 589   (AUTEN)<br>— — — | | **TECHNICAL FIELDS SEARCHED (Int. Cl.5)** |
| A | GB-A-2 055 421   (FOGGINI)<br>— — — | | B 60 N<br>F 16 B |
| A | EP-A-0 302 026   (VIDEOPLASTIC)<br>— — — — — | | |

The present search report has been drawn up for all claims

| Place of search | Date of completion of search | Examiner |
|---|---|---|
| The Hague | 20 January 92 | GATTI C. |